**Europäisches Patentamt**

**European Patent Office**

**Office européen des brevets**

(19)

(11) Veröffentlichungsnummer : **0 132 759**
**B1**

(12) **EUROPÄISCHE PATENTSCHRIFT**

(45) Veröffentlichungstag der Patentschrift :
**30.09.87**

(51) Int. Cl.⁴ : **F 16 H    1/44**

(21) Anmeldenummer : **84108397.5**

(22) Anmeldetag : **17.07.84**

(54) **Geräuschgedämpftes Selbstsperrdifferential.**

(30) Priorität : **02.08.83 PCT/EP83/00204**

(43) Veröffentlichungstag der Anmeldung :
**13.02.85 Patentblatt 85/07**

(45) Bekanntmachung des Hinweises auf die Patenterteilung : **30.09.87 Patentblatt 87/40**

(84) Benannte Vertragsstaaten :
**DE FR GB IT**

(56) Entgegenhaltungen :
**DE-C- 1 933 680**
**FR-A- 1 205 576**
**FR-A- 2 056 321**
**GB-A-   819 123**
**GB-A-   907 836**
**GB-A- 1 058 513**
**GB-A- 1 064 360**
**GB-A- 1 139 151**
**GB-A- 1 267 053**
**US-A- 3 104 174**
**US-A- 3 264 900**
**US-A- 3 929 036**
**US-A- 4 245 525**

(73) Patentinhaber : **ZAHNRADFABRIK FRIEDRICHSHA-
FEN AKTIENGESELLSCHAFT**
**Löwentaler Strasse 100 Postfach 2520**
**D-7990 Friedrichshafen 1 (DE)**

(72) Erfinder : **Ehrlinger, Friedrich**
**Karl-Weiss-Strasse 15**
**D-7990 Friedrichshafen (DE)**
Erfinder : **Sollbach, Gerhard**
**Akeleiweg 4**
**D-7990 Friedrichshafen (DE)**

(74) Vertreter : **Raue, Reimund**
**Zahnradfabrik Friedrichshafen AG Löwentaler
Strasse 100 Postfach 2520**
**D-7990 Friedrichshafen 1 (DE)**

EP 0 132 759 B1

## Beschreibung

Die Erfindung betrifft ein lastabhängiges Selbstsperrdifferential, wie es beispielsweise bekannt ist aus dem DE-U-19 96 368 und dem Prospekt F 9/6 SL 806509 der Anmelderin.

Dabei ist die Erfindung insbesondere gerichtet auf die Herabsetzung bzw. Beseitigung von Geräuschbelästigungen, wie sie beispielsweise beim langsamen Durchfahren von Kurven unter Last bisher auftraten und welche bislang noch lediglich mit Hilfe spezieller schmierungstechnischer Maßnahmen (z. B. mit präparierten Schmierölen) bekämpft wurden. (Siehe z. B. KRAFTHAND 15/1974 Seite 702.)

Gleichermaßen behoben bzw. vermieden werden sollen mit der Erfindung aber auch die bisher hauptsächlich bei unterschiedlichen Bodenhaftungen auftretenden Lastschläge und ihre ungünstigen Einflüsse auf die Fahreigenschaften.

Aufgrund allgemeiner Erfahrungen wußte man, daß zur Erreichung optimalen Betriebsverhaltens bei Selbstsperrdifferentialen der genannten Art eine günstige Abstimmung von Spreizkräften, Reibflächenanordnungen und Reibwerkstoffen erforderlich war.

Hinsichtlich der Spreizkräfte war bekannt, daß das lastabhängige Bremsmoment nur abhängig ist von den Spreizkräften, welche, je nach Bauprinzip, aus den Druckringbolzen oder von der Kegelradverzahnung oder von beiden erzeugt wurden. (Siehe ZAHNRADGETRIEBE, J. Looman, Springerverlag 1970 Seite 243.) Daher hatten sich jeweils bauartspezifische Spreizkraftoptimalbereiche entwickelt. So werden z. B. für den Schrägungswinkel ρ bei Druckringbolzenbetätigungen, je nach Reibwerkstoff, 20 bis 45° Schrägungswinkel bevorzugt (siehe AUTO, MOTOR, SPORT 4/1973 Seite 60 Position 5 der Zeichnung). Und für den Eingriffswinkel von Kegelradpaaren werden 20 bis 28° bevorzugt (siehe GLEASON-Verzahnungssystem von A. Wentzky, Stuttgart, Seite 19). An dieser Stelle wird sogar von der Verwendung von kleineren Eingriffswinkeln als 20° ausdrücklich abgeraten, « weil diese nicht der Norm für Kegelräder mit kleinem Flankenspiel entsprechen » (siehe Seite 8). Geringes Flankenspiel ist indessen aber auch eine wichtige Grundvoraussetzung für die Vermeidung von Spreizkraftschlägen und damit allgemein für ruhiges Betriebsverhalten. Auch bei durch Federkraft belasteten Selbstsperrdifferentialen liegen vergleichbare Spreizkraftabhängigkeiten von (siehe ZAHNRADGETRIEBE, Seite 243 Abbildungen 9.12 und 9.13).

Hinsichtlich der Reibwerkstoffe war aus den bisherigen allgemeinen Erfahrungen auch bekannt, daß für Geräusch- und Schlagdämpfung die bislang bevorzugten Reibwerkstoffe, wie z. B. aufgesinterte bzw. aufgespritzte metallkeramische bzw. metallische Gemische (siehe DE-E-19 33 680), weniger günstig wirkten als sogenannte Papierbeläge (siehe GB-E-819 123), wie sie bei Schaltkupplungen gebräuchlich sind.

Versuche, die Bremslamellenpakete der bislang bevorzugten Reibpaarungen Stahl-/Molybdän-Beschichtungen mit Reibflächenpapier zu ersetzen, befriedigten jedoch, offensichtlich wegen der hohen Reibflächenbelastungen (von bis zu 10 bzw. 16 N/mm²), noch nicht. Dies war insofern enttäuschend, weil Sperrdifferentiale mit einer sehr niedrigen Relativgeschwindigkeit (nur ca. 1 m/sec) betrieben werden (bei Schaltkupplungen ca. 20 bis 30 m/sec).

Eine Veränderung der Außenabmessungen der Selbstsperrdifferentiale oder deren Spreizelemente (wie sie z. B. aus der US 32 64 900 bekannt sind) gegenüber den bisher eingeführten, sehr kompakten Baugrößen konnte jedoch aus Typisierungs-, Preis- und Platzgründen nicht in Betracht gezogen werden.

Zwar stand fest, daß für einen Übergang auf Reibflächenpapier die Reibflächenbelastung der bisherigen Standard-Bauweise nicht weiter beibehalten werden konnte, jedoch kam auch keine lineare Anpassung der sonst üblichen Reibflächenbelastungen für Reibflächenpapier in Frage, da sonst der verfügbare Einbauraum unmöglich ausgereicht hätte.

Aufgabe der Erfindung nach Anspruch 1 ist es daher, eine geräuschgedämpfte Selbstsperrdifferential-Ausführung anzugeben, welche es kostengünstig ermöglicht, unter weitgehendster Beibehaltung der bisher für metallische bzw. metallkeramische Reibflächen üblichen Standard-Ausführungen und Hauptabmessungen ein an sich bewährtes, geräusch- und schlagminderndes Reibflächenpapier so einsetzbar zu machen, daß trotz der höheren Reibflächenbelastung bei Selbstsperrdifferential und eines gegenüber Metallreibflächen relativ höheren Abriebes die gewohnte Langzeitbenutzbarkeit der entsprechend ausgerüsteten Differentiale sichergestellt ist.

Diese Aufgabe wird mit den kennzeichnenden Merkmalen des Anspruches 1 im wesentlichen dadurch gelöst, daß sowohl Maßnahmen angegeben werden, um die nutzbare Reibfläche ohne äußere Vergrößerung des Differentialkorbes durch dünne Lamellen bei verbesserten Reibwerten zu vervielfachen als auch gleichzeitig die Spreizkraft erheblich so weit zu senken, daß sich eine bei den auftretenden Differentialbeanspruchungen auch noch für Langzeitlebensdauer tragbare Grenzbelastung der Reibflächen ergibt, wobei auch die gegenüber Metallamellen raschere Minderung der Lamellendicke infolge Abrieb nicht funktionshindernd ist. Durch zahlreiche Vergleichstests wurde die erfindungsgemäße Optimierung ermöglicht und nachgewiesen, ohne daß das vorher üblich gewesene Differential selbst erhebliche Änderungen erfahren hätte. Die baulichen Maßnahmen ergaben eine Eignung von bisher ungewohnt dünnen Reiblamellen, welche in vermehrter Zahl einbaubar wurden. Dabei machte man sich insbesondere den Umstand zu Nutze, daß sich mit einer erhöhten Übersetzung bzw. einem größeren Eingriffswinkel des Ausgleichskegelritzels zwar eine größere Übersetzung und damit eine größere Axialkraft ergibt, jedoch der Gewinn an Reibflächenzuwachs z. B. durch größere Lamellenanzahl als auch durch größeren Lamellenaußendurchmesser wegen gleichzeitiger Maßnahmen zur Spreizkräfteminderung, von nachhaltigerem Einfluß auf die Reibflächenbelastung ist.

Vorteilhafte Weiterbildungen werden mit den Unteransprüchen beschrieben.

Nach Anspruch 2 wurde erreicht, daß die erfindungsgemäßen Maßnahmen auch bei jenen Differentialen, die als Spreizelemente den Druckringbolzen verwenden, erfolgreich eingesetzt werden können. Dabei war es dank der niedriger ansetzbaren Spreizkraft möglich, auch im Bereich seiner Frontplatte den Innendurchmesser des Differentialkorbes zugunsten größerer Lamellen weiterzuvergrößern bzw. dort die Außenwanddicke stärker herabzusetzen, um auf ganzer Länge des Bremslamellenpaketes für breitere Lamellen Platz zu gewinnen.

Nach Anspruch 3 wurde erreicht, daß die erfindungsgemäße Ausgestaltung auch für solche Differentiale geeignet ist, welche allein aufgrund der unmittelbar vom Kegelgetriebe ausgehenden Spreizdrücke gebremst werden und keine außenliegenden Druckringe benötigen, sondern ihre Andrückflächen direkt am Rücken der Achskegelräder haben.

Bei dieser Bauart wird der Differentialkorbmantel lediglich auf Zug beansprucht, weshalb hierbei auf eine Wandverdickung im Bereich seiner Frontplatte ganz verzichtet werden kann und sich ein erheblicher Gewinn an weiterer Lamellenreibfläche erzielen läßt.

Nach Anspruch 4 wurde eine Möglichkeit gefunden, die verfügbaren Einbaumaße für die Bremslamellenpakete noch zu verlängern und ggf. für die verschleißbedingten Seitenversatz derselben so zu kompensieren, daß immer volle Zahnbreiten miteinander kämmen und eine hohe Laufruhe erhalten bleibt.

Nach Anspruch 5 wurde vorgesehen, die Zahnüberdeckung so weit zu vergrößern, daß auch Differentiale mit durch Federvorspannung abgestützten Bremslamellenpaketen gegen Ende ihrer Laufzeit immer noch ohne Zahneingriffsfehler arbeiten können.

Nach Anspruch 6 wurde die erfindungsgemäße Differentialkonstruktion mit einer besonders für die extrem dünnen Lamellen geeigneten Art ihrer Führung versehen.

Nach Anspruch 7 wurde eine für die erfindungsgemäße Ausgestaltung besonders geeignete Reibpapierqualität gefunden.

Nach Anspruch 8 wurde erreicht, daß die aufgrund der Spreizkraftsenkungen erzielten Beanspruchungsminderungen am Differentialkorb weiter in Richtung Kosten- und Geräuschdämpfung sowie Leichtbau ausgenützt werden.

Die erfindungsgemäße Kombination der besagten gleichgerichteten Maßnahmen haben sich entgegen den nach den ursprünglichen Fehlschlägen verständlichen Befürchtungen auch im praktischen Einsatz als sehr wirksam hinsichtlich Geräusch- und Schlagminderung erwiesen, obwohl gegenüber den bisherigen Anwendungen des Reibflächenpapiers eine etwa 6 fach höhere Reibflächenbelastung gewählt wurde. Die erfindungsgemäße Bauweise hat sich auch als überraschend kostengünstig erwiesen, weil die Unterbringung der erheblich dünneren Lamellen und deren Anzahlerhöhung auf das zum Teil 4- bis 5-fache mit den vergrößerten Achskegelrädern ohne Änderung der bisher für molybdänbeschichtete Lamellen eingeführten Differentialkorb-Hauptabmessungen möglich war und weil die zur Spreizkräftereduzierung vorgesehenen Winkeländerungen keine zusätzlichen Bearbeitungsmaßnahmen erforderten. Auch die Montagearbeit bleibt insgesamt nahezu gleich. Zumindestens ein Teil der durch die höhere Lamellenanzahl verursachten Mehrkosten wird dabei durch Materialminderaufwand an Gehäuse und Reibmaterial kompensiert.

Die Erfindung wird im folgenden anhand schematischer Zeichnungen noch näher erläutert.

Figur 1  ist eine Darstellung des Selbstsperrdifferentials, bei dem der Druckringbolzen über Schrägungswinkel als Spreizelement wirkt und je ein achsverschieblicher Druckring für die Bremsbetätigung vorhanden ist.

Figur 2  zeigt die Anordnung des Schrägungswinkels in der Druckringbolzenlagerung.

Figur 3  ist eine Darstellung des Selbstsperrdifferentials, bei dem die Kegelräder selbst Spreizelemente und die Achskegelräder verschieblich sind.

Figur 4  zeigt die Anordnung des Eingriffswinkels der Kegelräderverzahnung.

Figur 5  zeigt eine Draufsicht auf die Reibfläche mit der Führung der Außenlamellen im Differentialkorb.

Figur 6  zeigt einen Teilschnitt durch die Reiblamelle.

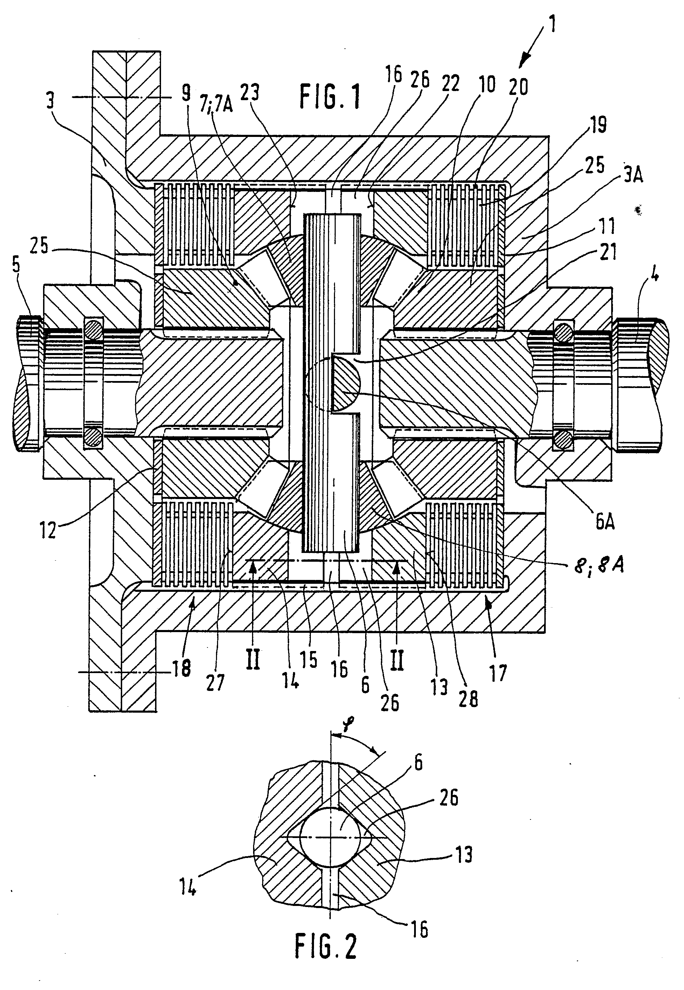

In Fig. 1 ist das Selbstsperrdifferential 1 mit einem von einem nicht gezeigten Tellerrad angetriebenen, einteiligen Differentialkorb 2 versehen, in welchem durch je eine vorgeflanschte und eine angegossene Frontplatte 3 bzw. 3A die Triebverbindung der beiden einander gegenüberliegenden Achswellen 4, 5 eingesetzt ist. Die Triebverbindung selbst besteht hier aus mindestens einem den Differentialkorb quer zu den Achswellen 4, 5 durchquerenden Druckringbolzen 6, welcher an jedem Ende je ein Ausgleichskegelritzel 7, 8 trägt, das beidseits des Druckringbolzens 6 mit je einem Achskegelrad 9, 10 in Dauereingriff ist. Die Achskegelräder 9, 10 sind dabei auf den Achswellen 4, 5 drehfest gehaltert und stützen sich über je eine Druckscheibe 11, 12 von innen gegen den Differentialkorb 2 bzw. dessen Frontplatten 3, 3A ab. Die Ausgleichskegelritzel 7, 8 sind dabei in den Differentialkorb 2 über je einen Druckring 13, 14 abgestützt, welcher sich gegen den Rücken der Ausgleichskegelritzel 7, 8 axial anlehnt, den sie unter Eingriff in ein Mitnahmeprofil 15 des Differentialkorbes 2 außen umfassen. Aufgrund einer im Zwischenraum 16 an den Enden des Druckringbolzens 6 mit den Druckringpaaren 13, 14 vorgesehenen Spreizverbindung werden die Ringe 13, 14 bei Drehzahldifferenz auf an sich bekannte Weise entlang dem Mitnahmeprofil 15 gegen eines von zwei gegenüberliegenden Bremslamellenpaketen 17, 18 gedrückt, die sich gegen die Frontplatten 3A, 3B des Differentialkorbes 2 bzw. die dazwischenliegenden Druckscheiben 11, 12 von innen abstützen, welche im gleichen Mitnahmeprofil 15 drehfest sind. Diese Druckscheiben 11, 12 können als gleichzeitig als Außenlamelle wirkende Tellerfedern ausgebildet sein und ergeben damit ohne Drehmomentbelastung am Differential auch eine Begrenzung des Bremsmomentes. Diese Anordnung ist prinzipiell auch gleich, wenn ein Differential mit vier statt nur zwei Ausgleichskegelritzeln 7, 8 ausgerüstet sein soll. Dann ist ein zweiter Differentialbolzen 6A mittels einer im Seitenwechsel versetzt angeordneten Ausnehmung 21 in der Mitte um 90° verdreht über den ersten Differentialbolzen 6 in der gleichen Drehachse montiert und dieser zweite Differentialbolzen 6A mit (nicht dargestellten) weiteren Ausgleichskegelritzeln 7A, 8A bestückt, welche ebenfalls mit den Achskegelrädern 9, 10 kämmen und sich axial gegen das Druckringpaar 13, 14 abstützen. Die beidseits mit Reibflächenpapier 24 belegten Innenlamellen 19 der Bremslamellenpakete 17, 18 sind auf einer Nabenverlängerung 25 der Achskegelräder 9, 10 drehfest, aber achsverschieblich geführt, während die Außenlamellen 20 im gleichen Mitnahmeprofil 15 wie die Druckringe drehfest und achsverschieblich geführt sind.

Die in Fig. 2 im Detail gezeigte Spreizverbindung besteht im wesentlichen darin, daß die beiden Druckringe 13, 14 an ihren einander zugewandten, innenseitigen Stirnflächen 22, 23 prismenförmige Ausfräsungen 26 haben, in denen die Differentialbolzen 6, 6A so geführt sind, daß bei Momentübertragung aus der Spreizverbindung in axialer Richtung wirkende Druckkräfte über die Druckringe 13, 14 auf die Bremslamellenpakete 17, 18 übertragen werden.

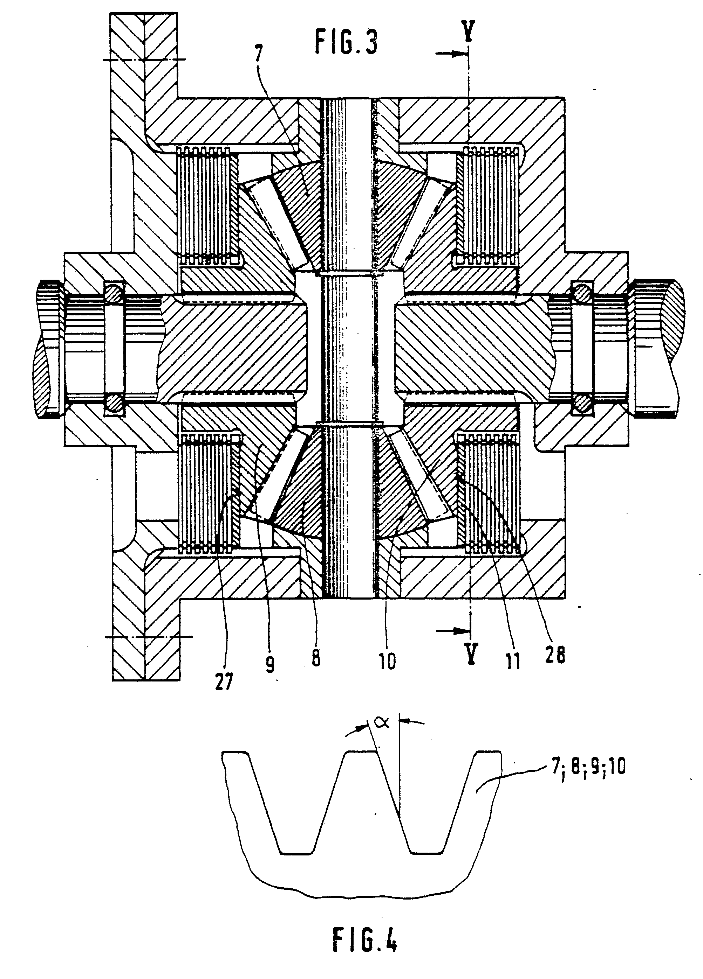

Die in Fig. 3 dargestellte Ausführungsalternative für ein Selbstsperrdifferential unterscheidet sich von der vorgeschilderten insbesondere dadurch, daß hier keine Druckringe benötigt werden, sondern daß die Rückseite der verschieblich angeordneten Achskegelräder 9, 10 selbst Andrückflächen 27, 28 für die Bremslamellenpakete 17, 18 sind und daß die Achskegelräder 9, 10 in Doppelfunktion auch die Spreizelemente darstellen, weil der Differentialbolzen 6 hier im Differentialkorb 2 selbst gehaltert ist und die Achskegelräder 9, 10 allein und unmittelbar von den aus den Momenten herrührenden Kräften der Kegelritzel 7, 8 gegen die Bremslamellenpakete 17, 18 gedrückt werden. Diese haben auf der Seite der Frontplatte 3, 3A eine Außenlamelle 20, die auch als Feder ausgebildet werden kann als Abschluß und auf der Seite des Kegelrades 9, 10 eine nur bremsenseitig mit Reibflächenpapier 24 belegte, verstärkte Innenlamelle 19 zum Ausgleich des Anpreßdruckes.

Eventuell auf die Bremslamellenpakete 17, 18 übertragene Lastwechselstöße können mittels federnder Außenlamellen (nicht gezeichnet) oder Federn abgestützt werden.

In Fig. 4 ist das Kegelradprofil zur Ausführung nach Fig. 3 dargestellt. Der Eingriffswinkel $\alpha$ ist derjenige Profilwinkel eines Zahnes, dessen Scheitel auf dem Teilkegel liegt, und soll erfindungsgemäß weniger als 20° betragen, um die bei dieser Anordnung allein durch Drehzahldifferenzen beider Achswellen entstehenden Spreizkräfte zu begrenzen.

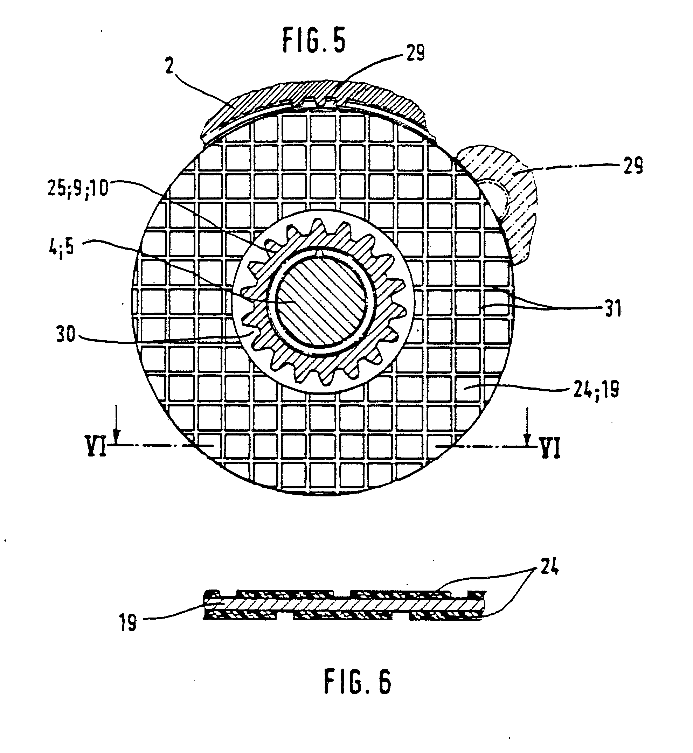

In Fig. 5 ist mit einem Querschnitt vor einer Innenlamelle 19 der Ausführung nach Fig. 3 eine Ansicht des Reibflächenpapiers 24 und der Führungsnut 29 des Differentialkorbes 2 dargestellt. Die Innenlamelle ist durch ein Mitnahmeprofil 30 auf der Achswelle 4 bzw. 5 drehfest gehalten. Das Reibflächenpapier 24 ist vorzugsweise mit Radialprofilierung 31 versehen und — gemäß Fig. 6 — auf eine dünne Stahlträgerlamelle beidseits so auflaminiert, daß die Profilrillen 31 zueinander versetzt sind. Die Dicken der Reibflächenpapieres 24 sowie der Stahlträgerlamelle werden sehr dünn gewählt, um eine möglichst große Anzahl von Reibflächenpaaren pro Bremslamellenpaket 17 bzw. 18 einander zuordnen zu können. Eine bewährte Innenlamelle 19 würde beispielsweise bei 94 mm äußerem und 45 mm innerem Ringdurchmesser nur einen 0,6 mm starken Stahlträger mit einer beidseitigen Reibflächenpapierauflage von je 0,4 mm aufweisen, so daß sich ein Fertigmaß von nur ca. 1,4 mm ergibt. Auch die (unbeschichteten) Außenlamellen 20 werden dann nur mit maximal 1,5 mm Dicke ausgeführt.

Die vorgeschilderten Konstruktionsmaßnahmen stellen eine nach langen Vergleichsserien erreichte und im Einsatz überraschend günstiges Geräusch- und Betriebsverhalten aufweisende Sperrdifferential-Bauweise dar, mit der dem Reibflächenpapier eine bis zu etwa 6mal höhere Nenndruckbelastung zugemutet werden kann als sie bislang für Getriebeautomatenkupplungen angesetzt werden konnte. Die Weiterverwendung von Differentialkörben der gleichen kompakten Abmessungen, wie sie für mit molybdänbeschichteten Reiblamellen ausgeführte Sperrdifferentiale ausreichten, ist damit unter weitgehender Geräuschdämpfung und Lastschlagsverminderung nun möglich, ohne daß dazu deutlich andere Sperrwerte in Kauf genommen werden müßten. Hinsichtlich der Kostenlage erweist es sich auch als besonders günstig, daß nicht mehr die durch den beträchtlichen Molybdänanteil sich laufend verteuernden Metallbeschichtungen verwendet werden müssen und daß der Differentialkorb dünnwandiger, evtl. als Aluminium-Gußteil, ausführbar ist und dazu der Druckringbolzen in einer eingesetzten Buchse gelagert ist, die die Wand des Differentialkorbes versteift.

**Patentansprüche**

1. Geräuschgedämpftes Selbstsperrdifferential (1),

bei welchem über im Mantel eines Differentialkorbes (2) gelagerte Ausgleichskegelritzel (8, 7A) eine ständige Triebverbindung zu auf je einer Achswelle (4, 5) drehfest gehaltenen Achskegelrädern (9, 10) besteht,

wobei die Achswellen (4, 5) durch einander gegenüberliegende Frontplatten (3, 3A) des Differentialkorbs (2) herausgeführt sind

und wobei die Achswellen (4, 5) mit Hilfe von ihnen drehfest zugeordneten, gegen die Frontplatten (3, 3A) abgestützten Bremslamellenpaketen (17, 18) unter Einwirkung von durch die Triebverbindung bei Drehzahldifferenzen verschieblichen Spreizelementen (9/10 bzw. 6) bzw. deren Andrückflächen (27, 28 bzw. 29, 30) getrennt abbremsbar sind,

dadurch gekennzeichnet,

daß die Bremslamellenpakete (17, 18) mit Reibbelägen aus Reibflächenpapier (24) versehen sind und jeweils aus mindestens vier Reibflächenpaaren bestehen, bei denen die unter 2 mm dicken Außenlamellen (20) belagfrei und die beidseits mit Reibbelag versehenen Innenlamellen (19) unter 3 mm dick gefertigt sind

und daß die Spreizelemente (9, 10 bzw. 6) auf eine Reibflächenbelastung unter 6 N/mm² bei Maximalsperrmoment ausgelegt sind.

2. Differential nach Anspruch 1, dadurch gekennzeichnet,

daß als Spreizelement ein Druckringbolzen (6) vorgesehen ist, welcher mit je einem gegen ein zugeordnetes Bremslamellenpaket (17, 18) anlegbaren Druckring (13, 14), an welchem sich die Andrückflächen (27, 28) gegenüber den Bremslamellenpaketen (17, 18) befinden, eine an sich bekannte Spreizverbindung, jedoch mit mehr als 50° Schrägungswinkel aus der Trennungsebene (16), bildet,

wobei die Druckringe (13, 14) in einer im Differentialkorb (2) eingearbeiteten Führungsnut (29) drehfest und axial verschieblich gehalten sind, während die Achskegelräder (9, 10) auf den Achswellen (4, 5) verschieblich, aber an den Frontplatten (3, 3A) abgestützt sind.

3. Differential nach Anspruch 1, dadurch gekennzeichnet,

daß die auf den Achswellen (4, 5) verschieblich geführten Achskegelräder (9, 10) als Spreizelement dienen,

wozu die Ausgleichskegelritzel (7, 7A bzw. 8, 8A) einen Verzahnungseingriffswinkel α 20° haben

wobei die Andrückflächen (27, 28) zum Bremslamellenpaket (17, 18) auf der Rückseite der Achskegelräder (9, 10) vorgesehen sind

und wobei die Achskegelräder Nabenverlängerungen (25) aufweisen, die die Innenlamellen (19) und eine nur bremsenseitig mit einer Reibfläche versehene Druckscheibe (11 bzw. 12) vor dem Bremslamellenpaket (17 bzw. 18) drehfest, aber axial verschieblich führen.

4. Differential nach Anspruch 1, dadurch gekennzeichnet, daß die Achskegelräder (9, 10) aufgrund einer über 1,4fachen Übersetzung der Triebverbindung einen Teilkegelwinkel > 55° zwecks geringerer Kegelhöhe und den längeren Bremslamellenpaketen (17, 18) angepaßte Nabenverlängerungen (25) aufweisen.

5. Differential nach Anspruch 3, dadurch gekennzeichnet, daß die Achskegelräder (9, 10) einen Überdeckungsgrad > 1,1 aufweisen.

6. Differential nach einem der vorstehenden Ansprüche, dadurch gekennzeichnet, daß die Außenlamellen (20) in am Differentialkorb (2) angeformten Profilen (31) mittels radialer Überstandsteilflächen (32) locker axial verschieblich geführt sind.

7. Differential nach Anspruch 1, dadurch gekennzeichnet, daß das Reibflächenpapier (24) einen über 20 % liegenden Zelluloseanteil enthält und auf den als metallische Scheiben von unter 1 mm Dicke ausgeführten Innenlamellen (19) auf an sich bekannte Weise unter Vorkehrung radialer Schmiernuten beidseits mit Phenolharzkleber aufgeklebt ist.

8. Differential nach Anspruch 1, dadurch gekennzeichnet, daß der Differentialkorb (2) ein Aluminiumdruckgußteil ist.

9. Differential nach Anspruch 1, dadurch gekennzeichnet, daß federnde Außenlamellen (20) bzw. Federscheiben vorgesehen sind.

**Claims**

1. A low noise limited slip differential (1),

in which a permanent driving connection is passed through a differential bevel pinion (8, 7a) located within the shell of a differential cage (2) to axle bevel gears (9, 10) fixed against rotation each on an axle shaft (4, 5),

in which the axle shafts (4, 5) are passing through opposite front plates (3, 3a) of differential cage (2),

and in which the axle shafts (4, 5) can be braked separately by means of motor disc brakes (17, 18) arranged in fixed condition with regard to rotation, supported against front plates (3, 3a) under the effect of shiftable spreading elements (9/10 or 6) or their pressure faces (27, 28 or 29, 30) shiftable by the driving connection due to different rotation speeds,

characterised in that

the motor disc brakes (17, 18) are provided with friction faces made of friction paper (24), and consisting of a least four friction face pairs, in which the external discs (20) without lining are less than 2 mm thick, and the internal brake discs (19) provided on both sides with friction linings are less than 3 mm thickness,

and the spreading elements (9, 10 or 6) are designed for a friction face load below 6 N/mm² as a maximum differential locking torque.

2. A differential according to claim 1, characterised in that,

a pressure ring pin (6) is provided as a spreading element which forms a spreading connection of the prior art, however with a bevel angle exceeding 50° with regard to the separating plane (16), used together with a pressure ring (13, 14) biased against an allocated motor disc brake set (17, 18) having pressure faces (27, 28) related to the brake disc packs (17, 18)

the pressure rings (13, 14) are held against rotation and axially slidable in a guide groove (29) provided in a differential cage (2) whereas the axle bevel gears (9, 10) are slidable on the axle shaft (4, 5) but supported on the front plates (3, 3a).

3. A differential according to claim 1, characterised

in that the axle bevel gears (9, 10) slidably mounted on axle shafts (4, 5) serve as spreading elements,

for which the differential bevel pinion (7, 7a and 8, 8a) have a gear meshing angle alpha below 20°,

the pressure faces (27, 28) for motor disc brake set (17, 18) are provided on the rear face of axle bevel gears (9, 10),

and axle bevel gears have an extended hub (25) by which the internal clutch discs (19) and a thrust washer (11 and 12) provided only on the brake face with a friction lining serve as a guide for axial displacement of motor disc brake set (17 and 18) fixed against rotation.

4. A differential according to claim 1, characterised in that the axle bevel gears (9, 10) have a hub extension (25) adapted to the longer motor disc brake set (17, 18) and having a bevel taper angle exceeding 55° due to a ratio of 1.4 of the drive connection in order to achieve a lower bevel gear height.

5. A differential according to claim 3, characterised in that the axle bevel gears (9, 10) have a coverage ration exceeding 1.1.

6. A differential according to one of the abovementioned claims, characterised in that outside discs (20) are easily slidable in axial direction and guided in splines (31) in differential cage 2 by means of radial part areas on the conference (32).

7. A differential according to claim 1, characterised in that the friction lining paper (24) includes a cellulose fibre content exceeding 20 % and stuck onto the internal clutch discs (16) designed as metal discs of less than 1 mm thickness by means of phenol resin adhesive on both faces of discs which are provided in a conventional way with radial lubrication grooves.

8. A differential according to claim 1, characterised in that the differential cage (2) is pressure die-cast in aluminium.

9. A differential according to claim 1, characterised in that spring type external discs (20) or spring discs are provided.

**Revendications**

1. Différentiel autobloquant (1) avec amortissement du bruit, dans lequel :

au moyen de pignons satellites coniques (8, 7A) montés dans la partie périphérique d'un corps de différentiel (2), une liaison motrice permanente est assurée sur des pignons d'essieu coniques (9, 10) dont chacun est solidaire en rotation d'un arbre d'essieu respectif (4, 5),

les arbres d'essieu (4, 5) émergent du corps de différentiel (2) à travers des plaques frontales (3, 3A) opposées l'une à l'autre,

et les arbres d'essieu (4, 5) peuvent être freinés séparément à l'aide de groupes de disques de freinage (17, 18) qui sont solidaires en rotation de ces arbres et qui sont appuyés contre lesdites plaques frontales (3, 3A) sous l'effet d'éléments écarteurs (9/10 ou 6) et de surfaces d'appui (27, 28 ou 29, 30), ces éléments étant déplacés par ladite liaison motrice en cas de différence de vitesse de rotation,

caractérisé en ce que :

les groupes de disques de freinage (17, 18) comportent des garnitures de friction en papier de friction (24) et comprennent chacun au moins quatre paires de surfaces de friction, les disques extérieurs (20) ayant moins de 2 mm d'épaisseur et étant dépourvus de garnitures, et les disques intérieurs (19) ayant moins de 3 mm d'épaisseur et étant revêtus de garnitures de friction sur leurs deux faces,

et les éléments écarteurs (9, 10 ou 6) sont agencés pour déterminer une charge de friction inférieure à 6 N/mm² pour le couple maximal de blocage.

2. Différentiel selon la revendication 1, caractérisé en ce que :

il est prévu comme élément écarteur un axe (6) à bagues de butée qui forme, avec une bague de butée respective (13, 14) associée à chaque groupe (17, 18) de disques de freinage et pourvue des surfaces d'appui (27, 28) contre les groupes de disques (17, 18), un mécanisme à écartement connu en soi, mais avec un angle d'obliquité supérieur à 50° par rapport au plan de séparation (16),

et les bagues de butée (13, 14) sont maintenues en rotation et sont coulissantes axialement dans une rainure de guidage (29) ménagée dans le corps de différentiel (2), tandis que les pignons d'essieu (9, 10) sont coulissants sur les arbres d'essieu (4, 5), mais s'appuient contre les plaques frontales (3, 3A).

3. Différentiel selon la revendication 1, caractérisé en ce que :

les pignons d'essieu (9, 10) montés coulissants sur les arbres d'essieu (4, 5) servent d'éléments écarteurs,

à cet effet, la denture des pignons satellites (7, 7A et 8, 8A) a un angle de pression inférieur à 20°,

les surfaces d'appui (27, 28) contre les groupes de disques (17, 18) sont prévues au dos des pignons d'essieu (9, 10),

et les pignons d'essieu comportent des moyeux prolongés (25) qui maintiennent en rotation, mais en les laissant coulisser axialement, les disques intérieurs (19) et un disque d'appui respectif (11, 12) disposé devant le groupe de disques de freinage (17, 18) et pourvu d'une garniture de friction seulement du côté du frein.

4. Différentiel selon la revendication 1, caractérisé en ce que les pignons d'essieu (9, 10), sur la base d'une démultiplication de la liaison motrice supérieure à 1,4, ont un demi-angle de conicité supérieur à 55°, afin de restreindre la hauteur du cône, et des moyeux prolongés (25) adaptés à la longueur accrue des groupes de disques de freinage (17, 18).

5. Différentiel selon la revendication 3, caractérisé en ce que les pignons d'essieu (9, 10) ont un facteur de chevauchement supérieur à 1,1.

6. Différentiel selon l'une des revendications précédentes, caractérisé en ce que les disques extérieurs (20) sont montés de manière à pouvoir coulisser librement axialement dans des profils ménagés dans le corps de différentiel (2), grâce à des protubérances radiales ayant des surfaces inclinées.

7. Différentiel selon la revendication 1, caractérisé en ce que le papier de friction (24) contient plus de 20 % de cellulose et en ce qu'il est collé au moyen d'une colle à résine phénolique sur les deux faces des disques intérieurs (19), constitués par des plaques métalliques de moins de 1 mm d'épaisseur, en ménageant d'une manière connue en soi des gorges radiales pour la lubrification.

8. Différentiel selon la revendication 1, caractérisé en ce que le corps de différentiel (2) est une pièce en aluminium coulée sous pression.

9. Différentiel selon la revendication 1, caractérisé en ce qu'il est prévu des disques extérieurs élastiques (20) ou des disques d'appui élastiques.

FIG.1

FIG.2

## FIG.3

## FIG.4

## FIG.5

29

2

25;9;10

4;5

30

29

31

24;19

VI —·—·— VI

19

24

## FIG. 6